# EUROPEAN PATENT SPECIFICATION

(11) **EP 1 390 293 B1**
(45) Date of publication and mention of the grant of the patent: **16.03.2005**
(21) Application number: 02718389.6
(22) Date of filing: 24.04.2002
(51) Int. Cl.: C01B 21/26, C01B 21/28

(54) **PROCESS FOR THE PREPARATION OF AMMONIA OXIDATION**
VERFAHREN ZUR HERSTELLUNG VON AMMONIAK
OXYDATION AMMONIACALE

(30) Priority: 04.05.2001 GB 0110962; 04.05.2001 GB 0110963
(43) Date of publication of application: 25.02.2004
(73) Proprietor: JOHNSON MATTHEY PUBLIC LIMITED COMPANY, London SW1Y 5BQ (GB)
(72) Inventor: AXON, Sean, Alexander, Cleveland TS15 9QW (GB); WARD, Andrew, Mark, Cleveland TS20 1JN (GB); WOLFINDALE, Brett, Albert, Cleveland TS15 9JA (GB)
(74) Representative: Gibson, Sara Hillary Margaret, Dr.
(86) International application number: PCT/GB2002/001899
(87) International publication number: WO 2002/090256

(56) References cited:
- GB-A- 1 350 242
- US-A- 3 881 004
- US-A- 5 690 900
- PATENT ABSTRACTS OF JAPAN vol. 2000, no. 05, 14 September 2000 (2000-09-14) & JP 2000 042359 A (OYABU TAKASHI), 15 February 2000 (2000-02-15)

## Description

This invention relates to ammonia oxidation and in particular ammonia oxidation employed in the manufacture of nitric acid. In an ammonia oxidation process, ammonia is oxidised with air to nitric oxide by passing the gas mixture at an elevated temperature over a catalyst to effect the oxidation.

Side reactions, such as the formation of nitrogen or nitrous oxide, are undesirable. Consequently, in addition to good activity, the catalyst is required to have a good selectivity.

For many years the catalysts employed have been platinum, sometimes alloyed with other precious metals, in the form of meshes or gauzes formed from the metal wire. Such catalysts have good activity and selectivity but suffer from the disadvantage that not only is the catalyst very expensive, but at the temperatures encountered, the metals exhibit an appreciable volatility and so gradually the metal is lost into the gas stream. While it is well known to provide downstream means to trap the volatilised metal so that it may subsequently be recovered, because of the continual volatilisation, the life of the catalyst is short and frequent replacement is necessary. Furthermore the recovery of the metals from the downstream trap and re-fabrication of the catalyst meshes or gauzes involves a considerable allocation of working capital.

It is therefore desirable to provide a replacement for such precious metal catalysts.

It is well known that cobalt compounds exhibit activity for ammonia oxidation. Particularly useful catalysts are described in, for example, EP-B-0946290. However we have found that cobalt based catalysts are prone to de-activation (poisoning) by compounds present in the gasses fed to the catalysts. In particular it has been found that sulphur compounds deactivate such catalysts. Attempts have been made to remove sulphur compounds from the process air using activated charcoal with limited success due to the poor affinity and/or capacity of this material for some sulphur compounds.

Our studies have shown that sulphur dioxide, which is often present in the process air in an industrial environment, is a significant source of deactivating sulphur compounds. We have found that by passing the process air through an absorbent material especially suitable for absorbing sulphur oxides, i.e. sulphur dioxide or sulphur trioxide, de-activation of the catalyst can be minimised.

Accordingly the present invention provides a process for the oxidation of ammonia by passage of a mixture of air and ammonia over a catalyst containing at least one cobalt compound at an elevated temperature wherein the air is passed through an absorber comprising a support carrying an absorbent material for acidic gases selected from an oxidising agent or an oxide, hydroxide, carbonate or bicarbonate of a group 1, 2 or 14 metal.

The air in the present invention may be passed through the absorber before or after it has been mixed with ammonia. Preferably the air is passed through the absorber before it is mixed with ammonia.

The support for the absorbent material may be in the form of a fibrous material, a monolithic support or a particulate support.

In most ammonia oxidation plants, the process air is passed through a filter to remove dust particles. The filter will normally comprise a wad of fibrous material, for example, cotton, glass, polyamide, polyester or polyolefin fibres held between a pair of perforate metal plates. We have realised that this filter may be modified and used to effect removal of sulphur oxides.

Thus in one embodiment of the invention the absorber comprises a fibrous support material comprising cotton, glass, polyamide, polyester or polyolefin fibres modified by coating or impregnating them with an absorbent material for acidic gasses.

In another embodiment the air is passed through a porous monolithic support, such as a ceramic or metal honeycomb or foam, especially an alumina, mullite or cordierite honeycomb, impregnated or coated with the absorbent material.

The use of fibrous or porous monolith absorbers comprising a fibrous, honeycomb or foam supports impregnated or coated with absorbent material may be advantageous compared to a fixed bed of a particulate absorbent material where such fixed beds can cause an undesirable resistance to flow of the air stream. However, where the particulate material is provided in a manner that does not undesirably restrict flow, such particulate materials are useful for the process of the present invention.

Thus in a further embodiment the absorber comprises a particulate support impregnated or coated with the absorbent material, wherein the particulate support is preferably disposed in a fixed bed.

Suitable particulate supports include alumina, carbon, aluminosilicates, silica, titania, magnesia, zirconia, ceria and ceramic materials and mixtures of these. The particulate support is preferably in the form of granules, pellets, tablets or extrudates having particle sizes in the range 1 mm to 15 mm and an aspect ratio, i.e. the largest dimension divided by the smallest dimension, of preferably less than 2.

The use of particulate absorber disposed in a fixed bed provides potentially a useful high surface area for acidic gas absorption. To overcome potential difficulties arising from the resistance to flow created by particulate absorbers they are preferably disposed in fixed beds that provide a short path for the air stream. Such beds are typically 10 to 1000 mm deep, particularly between 10 and 500 mm deep and more particularly between 10 and 100 mm deep, and are subjected to linear velocities typically in the range 10 to 1000 m/s⁻¹.

Cartridges containing beds of particulate absorbent materials are known to those skilled in the art and may be used in the process of the present invention. Such cartridges however suffer from a disadvantage that a large number (e.g. >100) may be required for industrial processes. The requirement for a large number of cartridges can lead to a complicated installation and lengthen maintenance down time. Furthermore settling and/or shrinkage of the particulate support within the beds held in the cartridges can reduce their effectiveness.

We have devised a particularly effective absorber unit comprising a particulate absorber disposed as a bed of substantially constant thickness between at least one pair of spaced apart parallel corrugated perforate members wherein the corrugations extend substantially vertically, said perforate members being bounded by an impermeable end-member.

The absorber may be installed as a single, e.g. square, rectangular or circular unit, or as a number of units shaped to fit appropriately in the air intake system for the process. The number of units is generally in the range 1 to 10. Installation of the complete absorber unit is possible, but it may be preferable to first install the perforate members within the air intake and then feed in using methods known to those skilled in the art, the particulate support impregnated or coated with an absorbent material through suitable sealable orifices in the perforate and/or end members. It is also possible to discharge the spent absorber material through suitable sealable orifices in the perforate and/or end members. The use of a single or small number of units in this way overcomes the difficulties with using multiple cartridges. The absorber unit dimensions will depend upon the size and shape of the air intake. For example, the absorber unit may be in the range 1 to 10 metres in height and 1 to 20 metres in width if in a square or rectangular configuration, or between 1 and 15 metres in diameter if circular.

An absorber unit will generally comprise one or more pairs of substantially parallel perforate members containing a particulate support material that has been impregnated or coated with an absorbent material, bounded by a substantially impermeable end-member. Between 1 and 5 pairs of perforate members may be used and if more than one pair is used, for example in heavily contaminated environments, the same or different absorbent materials may be provided in each pair as necessary to remove the contaminants from the air. Each pair of perforate members are preferably substantially parallel to other pairs, if present, with a distance separating each pair in the range 1 cm to 2 m. If desired, means for mixing the air flowing between the pairs of perforate members may be employed.

The perforate members may be perforate plates, meshes or grids with orifices sized to prevent leakage of the particulate support material contained therein. The perforate members containing the particulate support are substantially parallel and form therein a bed of particulate support material. The thickness of the contained bed of particulate support material is between 1 and 15 cm and preferably 1 to 10 cm.

The perforate members have substantially parallel vertical corrugations. The angle between the adjacent faces of the corrugations may be in the range 15 to 150 degrees and preferably is in the range 20 to 90 degrees. The use of corrugations provides the absorber unit with a higher surface area than a non-corrugated equivalent. For example with an angle between adjacent faces of 15 degrees, the surface area is 7.6 times larger than an equivalent without corrugations. The higher the surface area, the lower the resistance to flow through the absorber and hence the lower the compressor running costs. The use of vertical corrugations means that any settling of the particulate support material may leave a void at the top of the absorber. If settling is anticipated a baffle may be placed substantially perpendicular to the flow of air through the absorber that extends from an end member into the particulate material for a distance greater than, preferably at least twice, the depth of the expected settling and/or shrinkage. Alternatively, baffle plates may be fitted to the exterior of the perforate members in the region expected to be effected by settling and/or shrinkage.

The absorber in the form of for example, a particulate contained within an absorber unit or cartridges, honeycomb or foam may, if desired, be used in addition to a conventional air filter. Thus, an absorber may be placed upstream or downstream of a conventional air filter.

The absorbent material impregnated or coated onto the support is preferably a strong oxidising agent, such as potassium permanganate, or an oxide, hydroxide,carbonate or bicarbonate of a Group1, 2 or 14 (IUPAC Periodic Table) metal.

The metal may be any metal from Groups 1, 2 or 14, e.g. an alkali or alkaline earth such as sodium, potassium, beryllium, magnesium, calcium etc., or tin or lead. It is preferably selected from sodium, calcium, barium or lead. Preferred absorbent materials are sodium or potassium hydroxides, bicarbonates or carbonates, barium hydroxide, barium or calcium carbonates, or potassium permanganate.

The support may be coated or impregnated with an aqueous solution of a suitable metal compound and dried. Alternatively, the support may be coated or impregnated with an aqueous solution of a precursor to the absorbent material, e.g. calcium or barium nitrates or lead acetate, and then transformed, if necessary, to the oxide, hydroxide, or carbonate by appropriate treatment, for example treatment with a solution of an alkali metal hydroxide or carbonate and/or heating. Alternatively, where the desired absorbent material is insoluble in water, the support may be impregnated with a slurry of the absorbent material.

Any combination of support and absorbent material hereinbefore described may be suitable for removing acidic gasses in the process of the present invention. For example, absorbers may comprise sodium or potassium hydroxide or carbonate or magnesium or barium carbonate on α-alumina monoliths; sodium or potassium hydroxide, bicarbonate or carbonate on a particulate high surface area particulate alumina, aluminosilicate or activated carbon and potassium permanganate on alumina. Preferred absorbers comprise sodium or potassium hydroxide on an α-alumina monolith, potassium permanganate on alumina pellets, potassium hydroxide and sodium bicarbonate on activated carbon and sodium or potassium hydroxide, carbonate or bicarbonate on alumina pellets.

If desired additional compounds may be present on the particulate or monolothic supports as promoters. A preferred promoter is potassium iodide.

Where the absorber may be exposed to the atmosphere, for example where the absorber is present in an air filter, the absorbent material is preferably a Group 2 or 14 metal and is used in the form of an oxide, hydroxide, carbonate or bicarbonate, rather than as a soluble salt, since in high humidity conditions, water soluble absorbent materials might be leached from the support thereby decreasing their effectiveness.

The process of the present invention is an ammonia oxidation process employing a cobalt-containing catalyst. Preferred cobalt-containing catalysts are oxidic compositions containing cobalt and at least one rare earth element especially cerium and/or lanthanum. Preferably, as described in the aforesaid EP-B-0946290, the rare earth element to cobalt atomic ratio is in the range 0.8 to 1.2, and at least some of said cobalt and rare earth oxides being present as a mixed oxide phase with less than 30%, preferably less than 25%, of the cobalt (by atoms) being present as free cobalt oxides.

In the oxidation of ammonia to nitric oxide for the manufacture of nitric acid, the oxidation process may be operated at temperatures of 750-1000°C, particularly 850-950°C, pressures of 1 to 15 bar abs., with ammonia in air concentrations of 7-13%, often about 10%, by volume.

The invention will now be described by reference to the accompanying drawings in which;
Figure 1 is a diagrammatic cross section of an absorber unit suitable for containing a particulate absorber; and
Figure 2 is a diagrammatic cross section through the absorber unit depicted in Figure 1 perpendicular to the outer faces at position I-I.

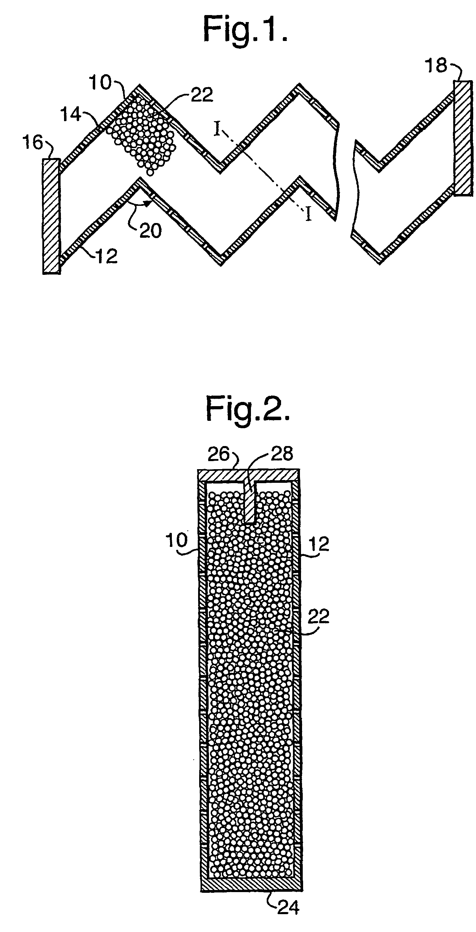

In Figure 1, the absorber unit comprises a single pair of parallel perforate plates 10 and 12 having orifices 14 to permit the flow of air into the unit and impermeable end members 16 and 18. The parallel plates 10 and 12 are corrugated with an angle 20 between adjacent faces of approximately 90 degrees. A particulate absorber 22 is disposed between the perforate plates to remove acidic gasses from the air as it passes through the absorber unit.

In Figure 2, the particulate absorber 22, disposed between perforate plates 10 and 12, is supported by an impermeable base member 24 and is capped by top member 26. The top member 26 has a baffle 28 substantially parallel to the perforate plates extending from the top member into the particulate absorber for a depth sufficient to prevent by-pass of air due to settling.

The invention is further illustrated by reference to the following Examples in which Examples 1 and 2 illustrate the susceptibility of cobalt-based ammonia oxidation catalysts to de-activation by sulphur oxides, and Examples 3, 4 and 5 demonstrate. the benefit of the process of the present invention. In the following examples the catalyst was a cobalt oxide/ceria/lanthana composition prepared by co-precipitation from an aqueous solution containing cobalt, cerium and lanthanum nitrates in the molar proportions 10:2:8 using an aqueous solution of oxalic acid and ammonium carbonate as precipitant. The precipitation was carried out at between 50 and 60°C and a pH of between 6 and 7. The resultant precipitate was then filtered, washed, dried at 120°C, calcined at 450°C, formed into cylindrical pellets of 3 mm height and diameter, and finally fired at 900°C for 6 hours. The catalyst particles were examined by X-ray Photoelectron Spectroscopy (XPS) and no sulphur was detected.

In the following examples, the composition of the gas mixture fed to and leaving the catalyst bed was monitored and the selectivity, defined as the sum of the molar amounts of NO and NO₂ in the gas leaving the catalyst divided by the molar amount of ammonia fed to the catalyst, was determined. Experience has shown that with this type of catalyst, the selectivity is also indicative of the catalyst activity.

### Example 1

An ammonia oxidation reactor was charged with about 1000 ml of the catalyst pellets to form of bed of thickness about 25 mm. A mixture of ammonia and air, containing about 11% by volume of ammonia, was preheated to 200°C and passed through the catalyst bed at a pressure of 5 bar abs., at a space velocity of about 240,000 h⁻¹ and the products analysed. The proportion of air was controlled to maintain the exit temperature at 900°C.

Over a period of 78.5 days, the selectivity gradually decreased from 95.1 % to 91.4%, indicating that the catalyst activity had also declined.

During the same period, the sulphur dioxide content of the atmosphere in the locality was monitored on a daily basis. The sulphur dioxide content varied from 0 to 2.7 ppb by volume and, over the period, averaged 0.64 ppb by volume.

It is thus seen that with the process air containing an average of about 0.64 ppb by volume of sulphur dioxide, the selectivity declined by about 3.7% over a period of 78.5 days (1884 hours).

After 45 days on line, samples of the catalyst were collected from a number of points in the bed. The catalyst bed was removed from the reactor at this stage, to allow for inspection of the vessel, and recharged again. This had the effect of mixing the catalyst pellets, so that pellets that had been near the top, i.e. inlet, of the bed, were not necessarily near the top of the bed after recharging.

A second set of samples were collected after a further 7 days on line and a third set at the end of the experiment after another 27.5 days on line. The samples were analysed by XPS and X-Ray Fluorescence (XRF). The XPS examination revealed that any sulphur was on the external surface of the pellets; except for one sample taken at the end of the experiment where a trace of sulphur was found inside the pellet, but near the surface. Sulphur was detected only on samples taken from the top of the bed: thus no sulphur was detected on samples taken from the middle or bottom of the bed. Table 1 shows the results of the XPS analyses of the samples taken from the top of the bed.

**Table 1**

| Number of days on line (since bed last disturbed) | Sulphur concentration | |
|---|---|---|
| | of external surface of pellet as determined by XPS (atom %) | of pellet as determined by XRF (ppm by weight) |
| 45 | 3.4 | 63 |
| 7 | 2.8 | - |
| 27.5 | 2.3 | - |

### Example 2

In a laboratory scale experiment, a fresh 10 ml sample of the catalyst pellets, was charged to a reactor of 25 mm interior diameter. A mixture of ammonia (5% v/v), oxygen (10% v/v), argon (1% v/v), and helium (balance) was fed to the reactor, preheated to 365°C, and passed over the catalyst at a pressure of 1.1 bar abs. at a flowrate of about 36.8 titres/minute. Over a period of 1 hour operation the selectivity was essentially constant at 97.6 %.

In order to simulate the use of contaminated air, after approximately 1 hour operation, sulphur dioxide in neon as a diluent tracer, was added to the ammonia / oxygen / argon /helium stream to give a sulphur dioxide content of 0.5 ppm by volume. The selectivity declined from 97.4% to 94.6% over a period of 1 hour from the start of the addition of the sulphur dioxide/neon mixture.

### Example 3

Example 2 was repeated using such an amount of the neon / sulphur dioxide mixture that the sulphur dioxide content of the feed was 3.4 ppm by volume, and a bed of 50 ml of an absorbent bed of particulate activated carbon impregnated with sodium hydroxide and potassium iodide was placed upstream of the catalyst. For 2 hours after commencement of the feeding of the neon / sulphur dioxide mixture, the selectivity remained constant at 94.5%. After 2 hours, the absorbent bed was no longer able to absorb the sulphur dioxide and "breakthrough" of sulphur dioxide occurred. At that stage, the selectivity of the catalyst started to decline. After a further 5 hours, the selectivity had fallen to 89.5% and then the feeding of the neon / sulphur dioxide mixture was stopped.

### Example 4

In a commercial-scale ammonia oxidation process capable of producing 350 te of nitric acid/day, employing a 25 mm deep bed of catalyst of composition as described above, the process air fed to the catalyst was passed through an absorber comprising an approximately 3 mm-sized particulate activated carbon support coated with a combination of potassium hydroxide and sodium bicarbonate contained within about 400 cartridges fitted within the air intake manifold. Following startup, atmospheric sulphur dioxide levels increased to approximately 10 ppm for a period of about 60 minutes without any reduction in catalyst selectivity.

### Example 5

A series of coated alumina honeycomb monoliths were prepared as follows. Cylindrical multi-channel α-alumina monoliths of ca. 24-mm diameter, having 145 channels of triangular cross section of approximately 1 mm base and 1 mm height, and were cut into 100 mm lengths. Solutions or dispersions of four absorbent materials were prepared and each monolith section submerged in the solution or dispersion for a between 20 and 120 minutes. The monoliths were removed from the coating bath and dried at 100°C overnight (ca 16 hours). The weights of the monoliths before and after coating were noted and used to calculate the quantity of absorbent material retained on the porous support. The details are listed in Table 2.

**Table 2**

| Sample Number | 1 | 2 | 3 | 4 |
|---|---|---|---|---|
| Absorbent | NaOH | CaCO₃* | Na₂CO₃ | BaCO₃* |
| Weight Dry Monolith (g) | 44.4 | 45.9 | 44.8 | 44.9 |
| Concentration of Solution or Dispersion (% ww) | 33 | 10 | 19 | 10 |
| Quantity of solution or dispersion | 300 ml | 100 g | 250 g | 100 ml |
| Soaking time of Monolith (Min.) | 120 | 20 | 40 | 35 |
| Weight Dried monolith (g) | 49.5 | 49 | 46.3 | 45.4 |
| Uptake of Absorbent (g) | 5.1 | 3.1 | 1.5 | 0.5 |
| Uptake of Absorbent (% ww) | 11.5 | 6.8 | 3.3 | 1.1 |

The samples marked (*) had polyvinylacetate added to aid wetting/dipersion of the absorbent material. Sample 2 had 0.9 g of a 1% aqueous solution of polyvinylacetate added; sample 4 had 1.5 g of a 1 % aqueous solution of polyvinylacetate added.

The ability of the monolith to capture sulphur dioxide was measured on a laboratory scale as follows. The monolith coated with NaOH according to Sample 1 was inserted onto a support plug of aluminosilicate fibre placed in glass tube of 25.1 mm i.d.

A mixture of oxygen (10.5% v/v), argon (1% v/v), and helium (balance) was fed to the tube at ambient temperature (ca 20°C), and passed through the monolith at 30.0 litres/minute at a pressure of 1.1 bar abs.

In order to simulate the use of contaminated air, after approximately 2 hour operation, 1.25%v/v sulphur dioxide in neon as a diluent tracer, was added at 27.8 cm³/minute to the oxygen / argon / helium stream to give a sulphur dioxide content of 11.6 ppm by volume.

The emerging gases were passed in series through a Drager tube, Drechsel bottle, containing water and methyl orange indicator, and Hewlett Packard bubble flow meter.

The Sulphur dioxide/Neon mixture was passed with the Oxygen/Argon/Helium mixture through the apparatus for 1 hr 45 minutes with no discolouration evident in the Drager tube or Drechsel bottle.

## Claims

1. A process for the oxidation of ammonia by passage of a mixture of air and ammonia over a catalyst containing at least one cobalt compound at an elevated temperature wherein the air is passed through an absorber comprising a support carrying an absorbent material for acidic gases selected from an oxidising agent or an oxide, hydroxide, bicarbonate or carbonate of a group 1, 2 or 14 metal.

2. A process according to claim 1 wherein the support is a wad of fibrous material selected from the group comprising cotton, glass, polyamide, polyester or polyolefin fibres.

3. A process according to claim 1 wherein the support is an alumina, mullite or cordierite honeycomb.

4. A process according to claim 1 wherein the support is a particulate support selected from the group comprising alumina, carbon, aluminosilicates, silica, titania, magnesia, zirconia, ceria and ceramic materials and mixtures of these in the form of granules, pellets, tablets or extrudates.

5. A process according to any one of claims 1 to 4 wherein the metal is sodium, potassium, calcium, barium or lead.

6. A process according to any one of claims 1 to 4 wherein the absorbent material is potassium permanganate.

7. A process according to any one of claims 1 to 6 wherein the catalyst comprises oxides of cobalt and at least one rare earth element.

8. A process according to claim 7 wherein the catalyst comprises oxides of cobalt, cerium and lanthanum.

9. A process according to claim 1 wherein the absorber comprises a particulate support carrying an absorbent material for acidic gases disposed as a bed of substantially constant thickness between at least one pair of spaced apart parallel corrugated perforate members wherein the corrugations extend substantially vertically, said perforate members being bounded by an impermeable end-member.

10. A process according to claim 9 wherein a baffle is placed substantially perpendicular to the flow of air through the absorber that extends from an end member into said absorber.

## Patentansprüche

1. Verfahren zur Oxidation von Ammoniak durch Überleiten einer Mischung aus Luft und Ammoniak über einen Katalysator, der wenigstens eine Kobaltverbindung enthält, bei einer erhöhten Temperatur, wobei die Luft durch einen Absorber geleitet wird, der einen Träger umfaßt, der ein absorbierendes Material für saure Gase trägt, das ausgewählt ist aus einem oxidierenden Mittel oder einem Oxid, Hydroxid, Bicarbonat oder Carbonat eines Metalls der Gruppe 1, 2 oder 14.

2. Verfahren nach Anspruch 1, wobei der Träger ein Kissen aus einem Fasermaterial ist, das aus der Gruppe ausgewählt ist, die Baumwoll-, Glas-, Polyamid-, Polyester- oder Polyolefin-Fasern umfaßt.

3. Verfahren nach Anspruch 1, wobei der Träger eine Aluminiumoxid-, Mullit- oder Cordierit-Wabe ist.

4. Verfahren nach Anspruch 1, wobei der Träger ein teilchenförmiger Träger ist, der aus der Gruppe ausgewählt ist, die Aluminiumoxid, Kohlenstoff, Aluminiumsilicate, Siliciumoxid, Titanoxid, Magnesiumoxid, Zirkoniumoxid, Ceroxid und keramische Materialien und Mischungen daraus in Form von Granulaten, Pellets, Tabletten oder Extrudaten umfaßt.

5. Verfahren nach irgendeinem der Ansprüche 1 bis 4, wobei das Metall Natrium, Kalium, Calcium, Barium oder Blei ist.

6. Verfahren nach irgendeinem der Ansprüche 1 bis 4, wobei das absorbierende Material Kaliumpermanganat ist.

7. Verfahren nach irgendeinem der Ansprüche 1 bis 6, wobei der Katalysator Oxide von Kobalt und wenigstens einem Seltenerdelement umfaßt.

8. Verfahren nach Anspruch 7, wobei der Katalysator Oxide von Kobalt, Cer und Lanthan umfaßt.

9. Verfahren nach Anspruch 1, wobei der Absorber einen teilchenförmiger Träger umfaßt, der ein absorbierendes Material für saure Gase trägt, der als Bett mit einer im Wesentlichen konstanten Dicke zwischen wenigstens einem Paar von voneinander beabstandeten parallelen gewellten perforierten Teilen angeordnet ist, wobei die Wellen sich im Wesentlichen senkrecht erstrecken, wobei die perforierten Teile durch ein undurchlässiges Endteil verbunden sind.

10. Verfahren nach Anspruch 9, wobei eine Ablenkplatte im Wesentlichen senkrecht zu dem Strom der Luft durch den Absorber angeordnet ist, die sich von einem Endteil in den Absorber hinein erstreckt.

## Revendications

1. Procédé pour l'oxydation de l'ammoniac par passage d'un mélange d'air et d'ammoniac sur un catalyseur contenant au moins un composé de cobalt à une température élevée, dans lequel l'air est passé à travers un absorbeur comprenant un support portant une matière absorbante pour les gaz acides, choisie entre un agent oxydant et un oxyde, hydroxyde, bicarbonate ou carbonate d'un métal du groupe 1, 2 ou 14.

2. Procédé suivant la revendication 1, dans lequel le support est un tampon de matière fibreuse choisie dans le groupe comprenant des fibres de coton, des fibres de verre, des fibres de polyamide, des fibres de polyester et des fibres polyoléfiniques.

3. Procédé suivant la revendication 1, dans lequel le support est une alumine, mullite ou cordiérite en nid d'abeilles.

4. Procédé suivant la revendication 1, dans lequel le support est un support en particules choisi dans le groupe comprenant l'alumine, le carbone, des aluminosilicates, la silice, l'oxyde de titane, la magnésie, la zircone, l'oxyde de cérium et des matières céramiques et mélanges des matières précédentes sous forme de granules, de pastilles, de comprimés ou d'extrudats.

5. Procédé suivant l'une quelconque des revendications 1 à 4, dans lequel le métal est le sodium, le potassium, le calcium, le baryum ou le plomb.

6. Procédé suivant l'une quelconque des revendications 1 à 4, dans lequel la matière absorbante est le permanganate de potassium.

7. Procédé suivant l'une quelconque des revendications 1 à 6, dans lequel le catalyseur comprend des oxydes de cobalt et l'au moins un élément faisant partie des terres rares.

8. Procédé suivant la revendication 7, dans lequel le catalyseur comprend des oxydes de cobalt, de cérium et de lanthane.

9. Procédé suivant la revendication 1, dans lequel l'absorbeur comprend un support en particules portant une matière absorbante pour les gaz acides, placée sous forme d'un lit d'épaisseur pratiquement constante entre au moins deux éléments perforés ondulés parallèle espacés l'un de l'autre dans lesquels les ondulations s'étendent pratiquement verticalement, lesdits éléments perforés étant délimités par un élément terminal imperméable.

10. Procédé suivant la revendication 9, dans lequel une chicane est placée pratiquement perpendiculairement au courant d'air à travers l'absorbeur qui s'étend à partir d'un élément terminal dans ledit absorbeur.
